# EUROPÄISCHE PATENTSCHRIFT

(11) **EP 0 765 210 B1**
(45) Veröffentlichungstag und Bekanntmachung des Hinweises auf die Patenterteilung: **02.07.2003**
(21) Anmeldenummer: 96912011.2
(22) Anmeldetag: 11.04.1996
(51) Int. Cl.: B29B 17/00, B29C 51/00, B65D 65/46, B29L 7/00

(54) **VERFAHREN ZUR HERSTELLUNG VON AUSGANGSMATERIAL ZUR HERSTELLUNG BIOLOGISCH ABBAUBARER SÄCKE UND BEUTEL**
METHOD OF PRODUCING A STARTING MATERIAL FOR PRODUCING BIOLOGICALLY DEGRADABLE SACKS AND BAGS
PROCEDE DE FABRICATION DE MATERIAU DE BASE POUR LA FABRICATION DE SACS ET SACHETS BIODEGRADABLES

(30) Priorität: 12.04.1995 DE 19513808
(43) Veröffentlichungstag der Anmeldung: 02.04.1997
(73) Patentinhaber: Natura Verpackungs GmbH, 48499 Salzbergen (DE)
(72) Erfinder: WURR, Egon, D-48432 Rheine (DE)
(74) Vertreter: Hoffmeister, Helmut, Dr. Dipl.-Phys.
(86) Internationale Anmeldenummer: EP9601550
(87) Internationale Veröffentlichungsnummer: WO96032240

(56) Entgegenhaltungen:
- EP-A- 0 537 657
- WO-A-93/06013
- WO-A-95/15698
- WO-A-95/15894
- DE-A- 3 939 721
- DE-A- 4 130 508
- US-A- 5 336 457
- DATABASE WPI Section Ch, Week 9220 Derwent Publications Ltd., London, GB; Class AF, AN 92-162753 (20) XP002010481 & JP,A,04 100 913 (TORAY IND. INC.) , 2.April 1992
- DATABASE WPI Week 9402 Derwent Publications Ltd., London, GB; AN 94-012469 (02) XP002010482 & JP,A,05 320 418 (KANEBO LTD.) , 3.Dezember 1993
- DATABASE WPI Section Ch, Week 9504 Derwent Publications Ltd., London, GB; Class A, AN 95-027727 (04) XP002010483 & JP,A,06 313 063 (TSUTSUNAKA PLASTIC IND. CO. LTD.) , 8.November 1994
- DATABASE WPI Section Ch, Week 9421 Derwent Publications Ltd., London, GB; Class ADQ, AN 94-173429 (21) XP002010484 & JP,A,06 115 601 (FUJITSU LTD.) , 26.April 1994

## Beschreibung

Die Erfindung betrifft ein Verfahren zur Herstellung von Web- oder Wirkbahnen oder Netzschläuchen, insbesondere geraschelten Wirkbahnen oder Netzschläuchen, aus denen biologisch abbaubare, insbesondere verrottbare (kompostierbare) hochfeste Säcke und Beutel anzufertigen sind.

Es sind verschiedene Verfahren zum Herstellen von biologisch abbaubaren Folien aus pflanzlichen Rohstoffen bekannt. Verwiesen wird hierbei auf DE-C-4 228 016, in der auch zahlreiche weitere Schriften referiert sind.

Derartige Folien eignen sich ohne weiteres auch zur Herstellung von Beuteln, Tragetüten und dergleichen; es stellt sich jedoch heraus, daß derartige Beutel in geschlossener Form sich für viele Produkte als Verpackungsbeutel nicht eignen, da sie Fäulnisvorgänge begünstigen. Ein Perforieren derartiger Beutel wiederum bringt keine signifikante Verbesserung und setzt die Reißfestigkeit so weit herab, daß ebenfalls keine Verwendbarkeit gegeben ist.

Insbesondere besteht ein Bedarf für das Verpacken von Kartoffeln, Zwiebeln oder anderen Agrarprodukten. Hier ist man gewohnt, in Netze oder Säcke, aber nicht in Folienbeutel zu verpacken. Netze oder Säcke werden als produktentsprechender angesehen, insbesondere bei frischer und/oder nasser Ware.

Aus der DE 39 39 721 A1 ist eine flächige Folie bekannt, die aus einer spezifischen Mischung aus Stärke und Polyvinylalkohol mit einem Hydrolysegrad von mindestens 93% besteht. Die Folie wird als ganze mindestens uniaxial verstreckt, wofür bestimmte Wertebereiche für die Parameter Temperatur, Feuchtigkeit und Verstreckungsverhältnis genannt sind. Auch ist angegeben, daß für einen höheren Verstreckungsgrad ein höherer Gehalt an Polyvinylalkohol (PVAC) notwendig ist. Eine Konditionierung und/oder Verstreckung von PVAC-freien Folien dort ebenso wenig offenbart wie die von Folienbändchen überhaupt.

Aus der DE-A-4 130 508 ist ein Netzstreifen zum Umhüllen von Preßkörpern aus Halmgut bekannt. Der Netzstreifen ist aus einem Raschelgewirk aus Folienbändchen gefertigt. Die Bändchen werden aus einer Folie aus einem Kunststoff geschnitten. Dem Kunststoff ist ein Zusatz beigefügt, der unter langfristiger Lichteinwirkung oder Einwirkung von Luft und/oder Luftfeuchtigkeit eine den Kunststoffverband auflösende Veränderung erfährt. Zur Netzbildung ist dem Netzstreifen ein plastifizierbares Stärkepräparat beigemischt.

Ein Schneiden und Verstrecken von Polyolefin-Flachfolienbändchen wird in der DE-Z-kettenwirk-praxis 3/76, S. 15 bis 18, beschrieben. Eine unverstreckte Folie von maximal 600 mm Breite und einer Stärke von 50 bis 100 µm wird in einem Arbeitsgang in Bändchen geschnitten, monoaxial gereckt und aufgebäumt. Die Verstreckung erfolgt im Verhältnis 1 : 4 bis 1 : 10. Eine Einstellung von zum Beispiel 1 : 6 ergibt einen Dehnungswert von 30% bis 35%.

Das Schneiden und Verstrecken von Polyolefin-Flächenbändchen ist auf plastifizierte Stärkepräparate zur Herstellung von Netzstreifen nicht übertragbar, denn Stärke ist ein sprödes Einsatzmaterial, das Verarbeitungsprobleme bereitet, je höher ihr Anteil am Gesamtvolumen ist.

Es stellt sich damit die Aufgabe, ein Verfahren anzugeben, bei dem aus einem an sich bekannten, folienartigen Ausgangsmaterial, das auf der Basis modifizierter Stärke hergestellt ist, unter Anwendung an sich bekannter Web- und Wirktechniken, ein hochfester Sack oder Beutel oder ein hochfestes Netz hergestellt werden kann. Das Produkt soll durchlüftbar und insbesondere zum Transport, zum Lagern und Anbieten von Kartoffeln, Zwiebeln und anderen Feldfrüchten geeignet und trotzdem entsprechend den Eigenschaften der Ausgangsfolie biologisch abbaubar sein.

Die Aufgabe wird gelöst durch ein Verfahren zur Herstellung von Web- oder Wirkbahnen, insbesondere geraschelten Wirkbahnen oder Netzschläuchen, aus denen biologisch abbaubare, insbesondere verrottbare hochfeste Säcke und Beutel anzufertigen sind, aus einem folienartigen Ausgangsmaterial der Dicke 10µm bis 350µm, das auf der Basis modifizierter Stärke hergestellt ist und das einen Erweichungspunkt zwischen 60°C und 80°C aufweist, mit folgenden Verfahrensschritten:
A) Konditionieren der Folie vor dem Aufschlitzen in einer Umgebung mit einer relativen Luftfeuchtigkeit von 45% bis 65% auf einen Feuchtigkeitsgehalt von 2 Gew.-% bis 25 Gew.-%,
B) Aufschlitzen der Folie zu Folien-Bändchen,
C) Recken der Folien-Bändchen unter Erwärmung auf eine Temperatur von 30°C bis 70°C, im Reckverhältnis zwischen 1:3 bis 1:10 bei einer relativen Luftfeuchtigkeit von 45% bis 65% und einen Feuchtigkeitsgehalt von 2 Gew.-% bis 25 Gew.-%,
D) Abkühlenlassen bis auf Zimmertemperatur und
E) Verarbeiten von Folien-Bändchen geeigneten Titers und geeigneter Breite zu einer Web- oder Wirkbahn oder zu einem Netzschlauch.

Die mit der Erfindung erzielten Vorteile bestehen insbesondere darin, daß durch die Anreicherung eines Feuchtigkeitsgehaltes von 2 Gew.-% bis 25 Gew.-% die auf der Basis modifizierter Stärke hergestellte Folie wie eine Kunststoffolie bearbeitet werden kann. Modifizierte Stärke ist ein trockener bzw. spröder Ausgangsstoff, der sich schwer verarbeiten läßt. Das Anreichern auf den Feuchtigkeitsgehalt von 2 Gew.-% bis 25 Gew.-% ermöglicht es, die Folie auf der Basis modifizierter Stärke wie eine Kunststoffolie zu schneiden und wie eine Kunststoffolie zu recken. Durch den Streckprozeß erfolgt eine Längsorientierung der Molekülketten, die eine hohe Festigkeit der monoaxial gereckten Streifen bewirkt. Dieses Ergebnis ist bei Polyolefinen bekannt. Es kann aber nicht als naheliegend angesehen werden, daß Folien aus Stärke gleiche oder vergleichbare Ergebnisse bringen.

Der Feuchtigkeitsgehalt in der Folie kann bereits vor dem Verfahrensschritt, frühestens bei deren Herstellung, auf 2 Gew.-% bis 25 Gew.-% angereichert werden. Durch den gleichbleibenden Feuchtigkeitsgehalt, beginnend bei der Herstellung, der Zwischenlagerung bishin zur Verarbeitung der Folie, deren gleichbleibende Qualität gesichert. Vermieden wird hierdurch ein Austrocknen und damit ein Brechen der Folie. Gesichert wird andererseits, daß die verwendete Folie sofort verarbeitet werden kann.

Vorteilhaft es ist, daß der Feuchtigkeitsgehalt in dem Bändchen nach ihrer Reckung im Verfahrensschritt C), wenigstens im Verfahrensschritt E), auf 2 Gew.-% bis 25 Gew.-% angereichert wird. Durch die Beibehaltung und weitere Aufrechterhaitung dieses Feuchtigkeitsgehaltes wird eine leichte Verarbeitung der Bändchen gewährleistet. Das Material behält seine Elastizität und läßt sich im entsprechenden Verhältnis recken. Das Anreichern der Bändchen auch während der Abkühlungsphase bei Zimmertemperatur und das weitere Verarbeiten der Folienbändchen kann mit dem gleichen Feuchtigkeitsgehalt vorgenommen werden.

Um die Verarbeitung der Folienbändchen zu erleichtern, werden diese vor dem Verfahrensschritt E) mit einem biologisch abbaubaren Öl aviviert.

Für die Anreicherung des Feuchtigkeitsgehaltes auf 2 Gew.-% bis 25 Gew.-% werden die Folie und die Folienbändchen
- einer relativen Luftfeuchtigkeit zwischen 45% und 65%, insbesondere zwischen 50% und 60%, und
- und einer Umgebungstemperatur zwischen +10°C und +35°C ausgesetzt. Insbesondere bei der Herstellung sollte die Folie einer Temperatur, die höher als +35°C ist, nicht ausgesetzt werden.

Für eine Vorbehandlung kann die Folie vor dem Verfahrensschritt B) 1 bis 48 Stunden, insbesondere 20 bis 30 Stunden, der relativen Luftfeuchtigkeit zwischen 45% und 65%, insbesondere zwischen 50% und 60%, und der Umgebungstemperatur zwischen +10°C und +35°C ausgesetzt werden. Eine derartige gezielte Vorbehandlung vor dem Schneiden der Folie wird immer dann vorgenommen, wenn nicht genau sicher ist, ob die Folie über den erforderlichen Feuchtigkeitsgehalt verfügt. Innerhalb der genannten Zeit und unter den genannten Bedingungen ist sie aber in der Lage, den erforderlichen Feuchtigkeitsgehalt aufzunehmen. Die Folie, wie auch die aus ihr hergestellten Bändchen, nehmen Feuchtigkeit bis zu einem bestimmten Sättigungsgrad auf. Eine darüber hinausgehende Menge an Feuchtigkeit wird auch bei einer längeren Verweildauer und der genannten Feuchtigkeit und Temperatur nicht mehr aufgenommen. Von Bedeutung sind deshalb diese Rahmenwerte für die Anreicherung des Feuchtigkeitsgehaltes in der Folie und in dem Gewebe während des Herstellungs-, Lagerungs- und Verarbeitungsprozesses.

Die Folie kann wenigstens aus 10 Gew.-% bis 90 Gew.-%, insbesondere 50 Gew.-%, modifizierter Stärke und 10 Gew.-% bis 90 Gew.-%, insbesondere 50 Gew.-%, biologisch abbaubarem Kunststoff, insbesondere einem Polylacton (PCL), Polyesteramid, Copolyester und/oder Polymilchsäure hergestellt werden. Die Dicke einer Folie sollte innerhalb ihrer Bahn zwischen -5% und +10% schwanken. Darüber hinausgehende Abweichungen können sich negativ beim Streckungsprozeß auswirken.

Für das Verfahren eignet sich insbesondere eine mit modifizierter Stärke gemäß DE-C-4 228 016 hergestellte Folie, die unter dem Produktnamen "BIOFLEX BF 102" angeboten wird. Angeboten wird dieses Produkt durch Biotec Biologische Naturverpackungen GmbH & Co., Emmerich.

Insbesondere ist wesentlich, daß sogenannte Schlauchnetze und/oder Raschelsäcke aus einer Folienbahn hergestellt werden können.

Die so hergestellten Raschelsäcke, die eventuell auch aus einem eingefärbten Folienmaterial hergestellt werden können, lassen sich in ein Entsorgungssystem integrieren, bei dem zunächst die landwirtschaftlichen Produkte, wie Kartoffeln oder Zwiebeln, an den Endverbraucher geliefert werden. Die anfallenden, kompostierbaren Küchenabfälle können dann von den geleerten Beuteln oder Säcken aufgenommen werden und in entsprechenden Kompostier-Vorrichtungen zu biologisch abgebautem Kompost umgewandelt werden. Hierdurch ergibt sich ein technischer Nutzeffekt, der die Akzeptanz und die Einführbarkeit des Produktes in besonderer Weise fördert. Solange die landwirtschaflichen Produkte nicht über eine bestimmte Temperatur und Zeit gelagert werden, sind die geraschelten Säcke absolut stabil und unverrottbar. Erst wenn ein gewisses Milieu, bestimmt aus Feuchtigkeit, Temperatur und mikrobakterieller Umgebung hinzukommt, zerfallen die Säcke sehr rasch zu einer kompostierten Masse.

Für die Herstellung der Web- und Wirkbahnen lassen sich Bändchen-Webmaschinen oder Bändchen-Raschelmaschinen verwenden, wie sie zur Herstellung von Web- und Wirkbahnen aus Polyethylen-Streifen bekannt sind, da das gereckte Bändchenmaterial in seinen Eigenschaften bekannten Polyethylen-Bändchen nahekommt.

Die Erfindung sei anhand einiger Beispiele erläutert:

### Beispiel 1

Handelsübliche Folie des Typs BIOFLEX BF 102 der Foliendicke 80 µm wird in bekannter Art in Streifen von 2,5 mm Breite geschnitten. Die Streifen werden vorgewärmt, vorgedehnt, dann auf 35° C erwärmt und im Verhältnis 1 : 5,5 gereckt. Es folgt ein Abkühlungsvorgang. Es wird damit aus der Folie eine Fadenschar paralleler, gereckter Bändchen hergestellt, die in eine Raschelmaschine einlaufen.

Vor der Verstreckung wurde der Arbeitsraum bei Raumtemperatur (+18° bis +24°C) auf eine relative Luftfeuchtigkeit von 55% gebracht und diese auch während der Verarbeitung gehalten. Die Fadenschar wird anschließend im fortlaufenden Prozeß unter den gleichen Klimabedingungen auf einer bekannten Raschelmaschine zu einer doppelbahnigen Ware verarbeitet, die je nach Größe geeignet ist, um z.B. Kartoffeln oder Zwiebeln in einer Menge von 1,5; 2,5 oder auch 25 kg abzufüllen.

Ergänzend ist zu dem vorstehend beschriebenen Beispiel zu bemerken, daß vorzugsweise ein Wirkverfahren eingesetzt wird, bei dem die vorgestreckten Folienbändchen zu einem groben Kettengewirk von etwa 20 bis 80 Maschen pro 10 cm, vorzugsweise zwischen 25 bis 35 Maschen pro 10 cm gewirkt werden.

### Beispiel 2

Aus dem Material BIOFLEX BF 102 werden Folien der Dicke 80 µm hergestellt. Die Folie wurde auf einem dafür geeigneten Extruder hergestellt, und zwar im Aufblasverhältnis 1 : 4. Verwendet wurde eine gekühlte angefeuchtete Luft, insbesondere angefeuchtete Stützund Innenluft, vorzugsweise mit Innenluftaustausch. Diese angefeuchtete Luft gibt der Folie zusätzliche Feuchtigkeit für die spätere Verarbeitung zu Bändchen.

Die aufgewickelte Folie wird auf einer separaten Anlage in Streifen von 5mm geschnitten. Die Streifen werden auf ca. 32° C erwärmt, verstreckt im Verhältnis 1 : 5 und auf getrennte Spulen aufgewickelt.

Vorzugsweise sollte auch bei diesem Vorgang wegen der "trockenen Stärkeanteile" eine relative Raumfeuchte von mehrt als 30%, vorteilhaft von 55% vorhanden sein. Aus diesen Bändchen werden dann auf sogenannten Bäum- oder Zettelmaschinen Kettbäume hergestellt. Diese Kettbäume können wahlweise ebenfalls auf Raschelmaschinen, aber auch auf Webmaschinen eingesetzt werden.

Die Schußbändchen werden hergestellt aus einer Folie von 50 µm Dicke zu einer Breite von 1mm. Die Schuß-Folienbändchen werden mit einem natürlichen Farbstoff (Beta-Karotin) eingefärbt, so daß sie eine orange-rote Farbe haben.

Aus dem Material wird eine Webbahn auf einer Bändchenwebmaschine an sich bekannter Art gewebt und als Ausgangsmaterial zur Verwendung von 50-kg-Säcken für Zwiebeln verwendet.

### Beispiel 3

Ein geraschelter oder gewebter Sack gemäß den Beispielen 1 oder 2 wird dazu verwendet, kompostierbare Abfälle aufzunehmen. Die gefüllten Säcke werden in eine Kompostieranlage eingeführt, in der mit Kompostbakterien angereicherter Umgebung eine Verrottung innerhalb von 2 bis 4 Wochen stattfindet. Der Verrottungsprozeß ist abhängig von dem System der Kompostieranlage.

### Beispiel 4

Ein nach Beispiel I hergestellter Raschelsack wird mit einer Werbebanderole versehen, die mit für die Kompostierung geeigneten und akzeptablen Farben bedruckt wird.

Produkte verschiedener Reißfestigkeiten können der eingangs genannten DE-C-4 228 016 entnommen werden. Die Folie kann sowohl über Schlauchextrusion als auch Schlitzextrusion hergestellt werden.

Grundsätzlich eignet sich das hergestellte Web- und Wirkmaterial natürlich auch für Einsatzzwecke, bei denen eine geringere Reißfestigkeit gefordert wird, beispielsweise für Weihnachtsbaum-Netze, Sichtblenden, Vogelschutznetze und andere, in der Landwirtschaft einsetzbare Netze, bei denen eine gesteuerte Verrottung erwünscht ist. Dazu gehören z. B. Palettenwickelnetze und sogenannte Rundballennetze für Strohballen.

Die Herstellung von hochfesten Säcken ist allerdings wesentlich anspruchsvoller als die von Geweben oder Netzen, bei denen die Festigkeit lediglich eine untergeordnete Rolle spielt, wie zum Beispiel Tennisblenden oder andere Verkleidungen, die nach der gleichen Methode hergestellt werden können.

## Patentansprüche

1. Verfahren zur Herstellung von Web- oder Wirkbahnen, insbesondere geraschelten Wirkbahnen oder Netzschläuchen, aus denen biologisch abbaubare, insbesondere verrottbare hochfeste Säcke und Beutel anzufertigen sind, aus einem folienartigen Ausgangsmaterial der Dicke 10µm bis 350µm, das auf der Basis modifizierter Stärke hergestellt ist und das einen Erweichungspunkt zwischen 60°C und 80°C aufweist, mit folgenden Verfahrensschritten:
A) Konditionieren der Folie vor dem Aufschlitzen in einer Umgebung mit einer relativen Luftfeuchtigkeit von 45% bis 65% auf einen Feuchtigkeitsgehalt von 2 Gew.-% bis 25 Gew.-%,
B) Aufschlitzen der Folie zu Folien-Bändchen,
C) Recken der Folien-Bändchen unter Erwärmung auf eine Temperatur von 30°C bis 70°C, im Reckverhältnis zwischen 1:3 bis 1:10 bei einer relativen Luftfeuchtigkeit von 45% bis 65% und Anreichern der Folienbändchen auf einen Feuchtigkeitsgehalt von 2 Gew.-% bis 25 Gew.-%,
D) Abkühlenlassen bis auf Zimmertemperatur und
E) Verarbeiten von Folien-Bändchen geeigneten Titers und geeigneter Breite zu einer Web- oder Wirkbahn oder zu einem Netzschlauch.

2. Verfahren nach Anspruch 1, **dadurch gekennzeichnet, daß** das Konditionieren bei einer relativen Luftfeuchtigkeit von 50% bis 60% und das Recken bei einer Erwärmung auf 35°C ± 3°C im Reckverhältnis zwischen 1 : 4,5 bis 1 : 6,5 bei einer relativen Luftfeuchtigkeit von 50% bis 60% erfolgt.

3. Verfahren nach Anspruch 1 oder 2, **dadurch gekennzeichnet, daß** der Feuchtigkeitsgehalt in den Folienbändchen nach ihrer Reckung im Verfahrensschritt C), wenigstens im Verfahrensschritt E), auf 2 Gew.-% bis 25 Gew.-% angereichert wird.

4. Verfahren nach einem der Ansprüche 1 bis 3, **dadurch gekennzeichnet, daß** für eine Vorbehandlung die Folie vor dem Verfahrensschritt B) 1 bis 48 Stunden, insbesondere 20 bis 30 Stunden, der relativen Luftfeuchtigkeit zwischen 45% und 65%, insbesondere zwischen 50% und 60%, und der Umgebungstemperatur zwischen +10°C und + 35°C ausgesetzt wird.

5. Verfahren nach einem der Ansprüche 1 bis 4, **dadurch gekennzeichnet, daß** die gereckten Folienbändchen vor dem Verfahrensschritt E) mit einem biologisch abbaubaren Öl aviviert werden.

6. Verfahren nach einem der Ansprüche 1 bis 5, **dadurch gekennzeichnet, daß** die Folie wenigstens aus 10 Gew.-% bis 90 Gew.-%, insbesondere 50 Gew.-%, modifizierter Stärke und 10 Gew.-% bis 90 Gew.-%, insbesondere 50 Gew.-%, biologisch abbaubaren Kunststoff, insbesondere einem Polycaprolacton (PCL), Polyesteramid, Copolyester und/oder Polymilchsäure hergestellt wird.

7. Verfahren nach einem der Ansprüche 1 bis 6, daß im Hinblick auf die Herstellung sogenannter Raschelsäcke ein Wirkverfahren eingesetzt wird, bei dem die vorgestreckten Folienbändchen zu einem groben Kettengewirk von etwa 15 bis 50 Maschen pro 10 cm, vorzugsweise zwischen 20 bis 35 Maschen pro 10 cm gewirkt werden.

8. Verfahren nach einem der Ansprüche 1 bis 7, **dadurch gekennzeichnet, daß** im Hinblick auf die Herstellung sogenannter Schlauchnetze ein Wirkverfahren eingesetzt wird, bei dem die vorgestreckten Folienbändchen zu einem Schlauchgewirk mit einer Fadenzahl von etwa 70 bis 110 Faden pro Schlauchumfang gewirkt werden.

9. Erzeugnis in Form eines Sacks, Beutels, Netzes oder einer Plane, hergestellt aus einer Web- oder Wirkbahn bzw. aus einem Netzschlauch nach einem der Ansprüche 1 bis 8.

10. Erzeugnis nach Anspruch 9, **gekennzeichnet durch** ein Etikett oder eine Banderole, welches oder welche aus einem biologisch abbaubaren und gegebenenfalls mit verrottbaren Farben bedruckten Abschnitt einer Folie mit einer Dicke von 25 bis 60 µm besteht, wobei das Etikett oder die Banderole aus der gleichen Folie geschnitten worden sind wie die Bändchen.

## Claims

1. A process for producing woven or knitted webs, more particularly tubular netting or knitted webs produced on a Raschel loom, from which webs biologically degradable, particularly rottable, high-strength sacks and bags can be made, from a starting material in film form of a thickness of 10 µm to 350 µm made on the basis of modified starch and having a softening point between 60°C and 80°C, comprising the following steps:
(A) conditioning the film before slitting in an environment having a relative air humidity of 45% to 65%, to a moisture content of 2% by weight to 25% by weight,
(B) slitting the film to form film ribbons,
(C) stretching the film ribbons with heating to a temperature of 30°C to 70°C in a stretching ratio between 1:3 to 1:10 at a relative air humidity of 45% to 65% and concentrating the film ribbons to a moisture content of 2% by weight to 25% by weight,
(D) allowing to cool to room temperature, and
(E) processing film ribbons of suitable titre and suitable width to form a woven or knitted web or a tubular netting.

2. A process according to claim 1, **characterised in that** conditioning is carried out at a relative air humidity of 50% to 60% and stretching is carried out with heating to 35°C ± 3°C in a stretching ratio of between 1:4.5 to 1:6.5 at a relative air humidity of 50% to 60%.

3. A process according to claim 1 or 2, **characterised in that** the moisture content in the film ribbons after their stretching in process step (C) is concentrated, at least in process step (E), to 2% by weight to 25% by weight.

4. A process according to any one of claims 1 to 3, **characterised in that** for a pretreatment the film is exposed, before process step (B), for 1 to 48 hours, particularly 20 to 30 hours, to a relative air humidity between 45% and 65%, more particularly between 50% and 60%, and an ambient temperature of between +10°C and 35°C.

5. A process according to any one of claims 1 to 4, **characterised in that** the stretched film ribbons are dressed with a biologically degradable oil before process step (E).

6. A process according to any one of claims 1 to 5, **characterised in that** the film is made at least of 10% by weight to 90% by weight, more particularly 50% by weight, of modified starch, and 10% by weight to 90% by weight, more particularly 50% by weight, of biologically degradable plastic, more particularly a polycaprolactone (PCL), polyesteramide, copolyester and/or polylactic acid.

7. A process according to any one of claims 1 to 6, **characterised in that** for the purpose of producing Raschel sacks, use is made of a knitting process wherein the pre-stretched film ribbons are knitted to form a coarse warp knitted fabric of about 15 to 50 loops per 10 cm, preferably between 20 to 35 loops per 10 cm.

8. A process according to any one of claims 1 to 7, **characterised in that** for the purpose of producing tubular netting use is made of a knitting process wherein the pre-stretched film ribbons are knitted to form a tubular knitted fabric having a thread count of about 70 to 110 threads per tube periphery.

9. A product in the form of a sack, bag, net or a flat object made from a woven or knitted web or from a tubular netting according to any one of claims 1 to 8.

10. A product according to claim 9, **characterised by** a label or a banderole which consists of a biologically degradable portion of a film, which if required is printed with rottable colours, said film having a thickness of 25 to 60 µm, the label or banderole being cut from the same film as the ribbons.

## Revendications

1. Procédé de fabrication de bandes tissées ou tricotées, en particulier de bandes tricotées Rachel ou de filets en tubes, à partir desquels on peut fabriquer des sachets et des sacs très résistants biodégradables, en particulier pourrissables, à partir d'un matériau de base en forme de feuille d'une épaisseur de 10 à 350 µm qui est fabriqué à base d'amidon modifié et qui présente un point de ramollissement compris entre 60 et 80 °C, comportant les étapes suivantes :
A) Conditionnement de la feuille avant la refente dans un environnement présentant une humidité relative de l'air de 45 à 65 %, à une teneur en humidité de 2 à 25 % en poids,
B) Refente de la feuille en bandelettes,
C) Etirage des bandelettes avec chauffage à une température de 30 à 70 °C, dans un rapport d'étirage de 1 :3 à 1 :10 pour une humidité relative de l'air de 45 à 65% et enrichissement des bandelettes à une teneur en humidité de 2 à 25 % en poids,
D) Refroidissement jusqu'à la température ambiante, et
E) Traitement de bandelettes de titre approprié et de largeur appropriée pour former une bande tissée ou tricotée ou un filet en tube.

2. Procédé selon la revendication 1, **caractérisé en ce que** le conditionnement s'effectue à une humidité relative de l'air de 50 à 60 % et l'étirage avec un chauffage à une température de 35 °C ± 3° dans un rapport d'étirage compris entre 1 :4,5 et 1 :6,5 pour une humidité relative de l'air de 50 à 60 %.

3. Procédé selon la revendication 1 ou 2, **caractérisé en ce que** la teneur en humidité dans les bandelettes après leur étirage à l'étape C), au moins à l'étape E), est enrichie à 2 à 25 % en poids.

4. Procédé selon l'une des revendications 1 à 3, **caractérisé en ce que** pour un traitement préalable, la feuille, avant l'étape B), est soumise pendant 1 à 48 heures, en particulier 20 à 30 heures, à l'humidité relative de l'air comprise entre 45 et 65 %, en particulier entre 50 et 60 %, et à la température ambiante comprise entre +10 °C et + 35 °C.

5. Procédé selon l'une des revendications 1 à 4, **caractérisé en ce que** les bandelettes étirées, avant l'étape E), sont avivées avec une huile biodégradable.

6. Procédé selon l'une des revendications 1 à 5, **caractérisé en ce que** la feuille est fabriquée au moins à partir de 10 à 90 % en poids, en particulier 50 % en poids, d'amidon modifié et 10 à 90 % en poids, en particulier 50 % en poids, de matière synthétique biodégradable, en particulier d'un polycaprolactone (PCL), de polyesteramide, de copolyester et/ou de polyacide lactique.

7. Procédé selon l'une des revendications 1 à 6, **caractérisé en ce qu'**en vue de fabriquer des sacs Rachel, on utilise un procédé de tricotage dans lequel les bandelettes préétirées sont tricotées en un tricot à mailles grossier comportant environ 15 à 50 mailles sur 10 cm, de préférence entre 20 à 35 mailles sur 10 cm.

8. Procédé selon l'une des revendications 1 à 7, **caractérisé en ce qu'**en vue de fabriquer des filets en tubes, on utilise un procédé de tricotage dans lequel les bandelettes préétirées sont tricotées en un tricot en tube avec un nombre de fils d'environ 70 à 110 fils par tour de tube.

9. Produit sous la forme d'un sac, d'un sachet, d'un filet ou d'une bâche, fabriqué à partir d'une bande tissée ou tricotée ou d'un filet en tube suivant l'une des revendications 1 à 8.

10. Produit selon la revendication 9, **caractérisé par** une étiquette ou une bande de fermeture qui est formée d'un morceau de feuille d'une épalsseur de 20 à 60 µm biodégradable et le cas échéant imprimé avec une encre pourrissable, l'étiquette ou la bande de fermeture ayant été découpée dans la même feuille que les bandelettes.
